# EUROPEAN PATENT SPECIFICATION

(11) **EP 2 023 087 B1**
(45) Date of publication and mention of the grant of the patent: **24.11.2010**
(21) Application number: 08162065.0
(22) Date of filing: 08.08.2008
(51) Int. Cl.: G01C 21/34, G08G 1/0969

(54) **Information guidance system and information guidance method**
Informationsführungssystem und Informationsführungsverfahren
Système de guidage d'informations et procédé de guidage d'informations

(30) Priority: 10.08.2007 JP 2007209275
(43) Date of publication of application: 11.02.2009
(73) Proprietor: Aisin AW Co., Ltd., Fujii-cho Anjo-shi, Aichi 444-1192 (JP)
(72) Inventor: Nakayama, Takaaki, Okazaki-shi Aichi 444-8564 (JP); Kawauchi, Hiroshi, Okazaki-shi Aichi 444-8564 (JP)
(74) Representative: TBK-Patent

(56) References cited:
- JP-A- 11 351 900
- JP-A- 2006 209 106
- JP-A- 2007 155 392
- US-A1- 2002 010 543
- US-A1- 2004 088 110
- US-A1- 2005 216 511

## Description

### BACKGROUND OF THE INVENTION

### 1. Field of the Invention

The present invention relates to an information guidance system and a program.

### 2. Description of the Related Art

In a related-art navigation device, a present position, i.e., a present location, of one's own vehicle is detected by, for example, a global positioning system (GPS), map data is read from a data record section, a map screen is formed on a display section, and a vehicle position representing the present location, a map of a vicinity of the vehicle position, and the like are displayed on the map screen. Thus, a driver as an operator can drive the vehicle in accordance with the vehicle position and the like displayed on the map screen.

When the driver inputs a destination and sets a search condition, a route search process is performed based on the search condition, whereby a route from a departure point represented as the present location to the destination is searched based on the map data. The searched route, i.e., a searched route, is displayed together with the vehicle position on the map screen, and guidance of the searched route, i.e., route guidance, is performed. Thus, the driver can drive the vehicle along the displayed searched route.

There are cases where the route guidance is performed using a name of a facility. For example, when the vehicle needs to make a right or left turn at a predetermined intersection, the intersection is set as a guidance intersection, and the route guidance is performed before the vehicle reaches the guidance intersection by outputting a voice.

Besides the route guidance at the guidance intersection, when the vehicle needs to pass a predetermined facility, the facility is set as a guidance facility, and the route guidance is performed before the vehicle reaches the guidance facility by outputting the voice.

To this end, one or more guidance output locations are set slightly before the guidance intersection or the guidance facility on the searched route by a set distance, so that when the vehicle reaches the respective guidance output locations, guidance with a content set in advance for each guidance output location, e.g., a guidance phrase such as "Proceed toward xx hall at intersection n about 300 meters forward." and "Xx hall is about 50 meters forward." is output by voice (for example, see Japanese Patent Application Publication No. JP-A-11-351900).

There are cases where, for example, the name of the facility is changed due to circumstances such as a change of an owner of the facility. In that case, data is updated by a producer of the map data, whereby the driver can acquire the updated data via an update disk, a network, or the like and record the data in the data record section.

### SUMMARY OF THE INVENTION

However, in the related-art navigation device, there are cases where data of a new name is recorded in the data record section, while the name of facility indicated by a road indication, a guidance board, or the like on an actual road is not changed. In that case, the name of the facility used in the route guidance differs from the name of the facility used on the actual road, whereby the driver cannot drive the vehicle smoothly in accordance with the route guidance.

If the name of the facility indicated by the road indication, the guidance board, or the like has been changed, and the driver does not know the changed name while the name of the facility used in the route guidance differ from what the driver knows, the driver cannot drive the vehicle smoothly in accordance with the route guidance.

It is an object of the present invention to solve the problem of the related-art navigation device and provide an information guidance system and a program by which a vehicle can be driven smoothly in accordance with route guidance.

To this end, an information guidance system according to an aspect of the present invention includes a route search process unit configured to search for a route from a departure point to a destination as a searched route, a guidance location setting process unit configured to set, based on the searched route, a guidance facility used for performing guidance of a guidance location on the searched route, a name determination process unit configured to determine whether a name of the guidance facility set in the guidance location setting process has been changed, and a change guidance process unit configured to perform, in a case where the name of the guidance facility has been changed, guidance notifying that the name of the guidance facility has been changed.

According to the present invention, a route from a departure point to a destination is searched as a searched route, and whether the name of a facility used for performing guidance for a guidance location on the searched route has been changed is determined. If the name has been changed, guidance notifying that the name has been changed is performed. Thus, a vehicle can be driven smoothly in accordance with the route guidance.

### BRIEF DESCRIPTION OF THE DRAWINGS

FIG. 1 is a view showing a navigation system according to a first embodiment of the present invention;
FIG. 2 is a flowchart showing an operation of a guidance process unit according to the first embodiment of the present invention; and
FIG. 3 is a flowchart showing an operation of a guidance process unit according to a second embodiment of the present invention.

### DETAILED DESCRIPTION OF THE PREFERRED EMBODIMENTS

Embodiments of the present invention are described below in detail with reference to the drawings. Herein, a navigation system as an information guidance system is described.

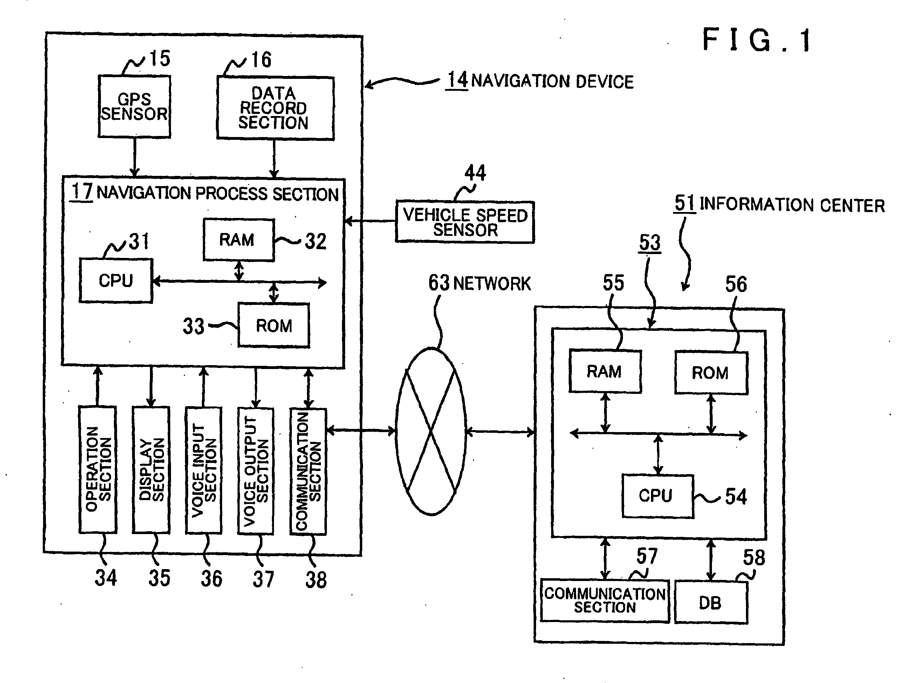

FIG. 1 is a view showing a navigation system according to a first embodiment of the present invention.

In the drawing, a reference numeral 14 denotes an information terminal, e.g., a navigation device as an on-vehicle device mounted on a vehicle, a reference numeral 63 denotes a network, and a reference numeral 51 denotes an information center as an information provider. The navigation device 14, the network 63, the information center 51, and the like form the navigation system.

The navigation device 14 includes a GPS sensor 15 as a present location detection section which detects a direction of a vehicle as a vehicle direction with a present location of the vehicle as a vehicle position, a data record section 16 as an information record section in which map data (not shown) and various information are recorded, a navigation process section 17 which performs various arithmetic processes such as a navigation process, an operation section 34 as a first input section for performing a predetermined input by an operation by a driver as an operator, a display section 35 as a first output section for performing various displays using an image displayed on a screen (not shown) for notification to the driver, a voice input section 36 as a second input section for performing a predetermined input by a voice of the driver, a voice output section 37 as a second output section for performing a voice output to notify the driver of various information, and a communication section 38 as a transmission/reception section which functions as a communication terminal. The GPS sensor 15, the data record section 16, the operation section 34, the display section 35, the voice input section 36, the voice output section 37, and the communication section 38 are connected to the navigation process section 17. A vehicle speed sensor 44 or the like as a vehicle speed detection section which detects a vehicle speed is also connected to the navigation process section 17. The GPS sensor 15 detects a time other than the vehicle position and the vehicle direction. Note that the vehicle direction may be detected by arranging a direction sensor independently from the GPS sensor 15.

The data record section 16 includes a map database formed of a map data file, and records map data in the map database. The map data includes intersection data regarding an intersection (diverging point), node data regarding a node, road data regarding a road link, searched data processed for searching, and facility data regarding a facility, and also includes feature data regarding a feature on a road.

The feature is an indicated object provided or formed on the road in order to provide various driving information to the driver and perform various driving guidance, and is formed of an indication line, a road sign, a crosswalk, a manhole, a traffic light or the like. The indication line includes a stop line for stopping the vehicle, a vehicle lane boundary line which divides each lane, and a segment line which represents a parking space. The road sign includes a road indication for guidance of each direction at the intersection by paint using the name of the location, the name of the facility, or the like, the guidance board for guidance of each direction at the intersection using the name of the location, the name of the facility, or the like on a board, a passing zone sign which represents a travel direction of each lane using an arrow, and a guidance sign such as "STOP" which indicates a place for a temporary stop. The feature data includes position information representing a position of each feature using coordinates and the like and image information representing the image of each feature. Note that the place for the temporary stop includes an entrance from a non-priority road to a priority road, a railroad crossing, an intersection with a blinking red light, and the like.

The data record section 16 includes a disk (not shown), such as a hard disk, a CD, a DVD, and an optical disk, for recording the various data, and includes head (not shown) such as a read/write head for reading and writing various data. A memory card and the like may be used for the data record section 16. Note that the disk, the memory card, and the like form an external storage device.

In this embodiment, the map database and the like is formed in the data record section 16, but the map database and the like may also be formed in the information center 51.

The navigation process section 17 includes a CPU 31 as an arithmetic device and as a control device which performs an overall control of the navigation device 14, a RAM 32 used as a working memory when the CPU 31 performs various arithmetic processes, a ROM 33 recording a control program and various programs for performing a searching of a route to a destination, a route guidance, and the like, and a flash memory (not shown) used for recording various data, programs, and the like. The RAM 32, the ROM 33, the flash memory, and the like form an internal storage device.

As the operation section 34, a keyboard, a mouse, and the like (not shown) arranged independently from the display section 35 may be used. Also, as the operation section 34, a touch panel may be used which allows a predetermined input operation to be performed by touching or clicking an image operation section such as various keys, switches, and buttons, displayed as an image on the screen formed in the display section 35.

A display is used as the display section 35, whereby the direction of the vehicle as the vehicle direction with the present location of the vehicle as the vehicle position can be displayed, a map, a searched route, guidance information along the searched route, traffic information, and the like can be displayed, and a distance to the next intersection along the searched route and the travel direction at the next intersection can be displayed on the screen formed in the display section 35.

The voice input section 36 is formed by a microphone (not shown) and the like, and necessary information can be input by voice. Further, the voice output section 37 includes a voice synthesis device and a speaker (not shown), and the searched route, the guidance information, the traffic information, and the like are output from the voice output section 37 as, for example, a voice synthesized by the voice synthesis device.

The communication section 38 includes a beacon receiver (not shown) for receiving various information such as current traffic information transmitted from a road traffic information center and general information, and an FM receiver (not shown) for receiving the various information as an FM multiplex broadcast via an FM broadcast station. The communication section 38 can receive data, such as the map data, and various kinds of information, such as the traffic information and the general information, from the information center 51 via the network 63.

To this end, the information center 51 includes a server 53, a communication section 57 connected to the server 53, and a database (DB) 58 as an information record section. The server 53 includes a CPU 54 as a control device and as an arithmetic device, a RAM 55, and a ROM 56. The database 58 records data similar to the various data recorded in the data record section 16.

The navigation system, the navigation process section 17, the CPUs 31 and 54, the server 53, and the like function as a computer independently or in combination of two or more, and perform the arithmetic process based on various programs, data, and the like. The data record section 16, the RAMs 32 and 55, the ROMs 33 and 56, the database 58, the flash memory, and the like form a storage medium. As the arithmetic device, an MPU or the like instead of the CPUs 31 and 54 may be used.

Next, a basic operation of the navigation system having the configuration described above is described.

When the operation section 34 is operated by the driver and the navigation device 14 is started, a present location read process unit (not shown) of the CPU 31 performs a present location read process and reads the vehicle position and vehicle direction detected by the GPS sensor 15. Next, a matching process unit (not shown) of the CPU 31 performs a matching process, and identifies the vehicle position by performing a determination on which road link the vehicle is on, based on a track of the read vehicle position and a shape, an alignment, and the like of each road link forming the roads in the vicinity of the vehicle position.

Next, a basic information acquisition process unit (not shown) of the CPU 31 performs a basic information acquisition process, and reads and acquires the map data from the data record section 16, or receives and acquires the map data from the information center 51 or the like via the network 63 and the communication section 38. Note that, in the case of acquiring the map data from the information center 51 or the like, the basic information acquisition process unit downloads the received map data to the flash memory.

A display process unit (not shown) of the CPU 31 performs a display process, and forms various screens on the display section 35. For example, a map display process unit of the display process unit performs a map display process and forms a map screen on the display section 35 to display a map of a surrounding area on the map screen and display the vehicle position and the vehicle direction.

Thus, the driver can drive the vehicle in accordance with the map, the vehicle position, and the vehicle direction.

When the driver operates the operation section 34 to input the destination, a destination setting process unit (not shown) of the CPU 31 performs a destination setting process and sets the destination. Note that a departure point may be input and set if necessary. Also, a predetermined location registered in advance may be set as the destination. Next, when the driver operates the operation section 34 to input a search condition, a search condition setting process unit (not shown) of the CPU 31 performs a search condition setting process and sets the search condition.

When the destination and the search condition are set in this manner, a route search process unit (not shown) of the CPU 31 performs a route search process, reads the vehicle position, the vehicle direction, the destination, the search condition, and the like, reads search data and the like from the data record section 16, searches for the route from the departure point represented by the vehicle position to the destination based on the vehicle position, the vehicle direction, the destination, the search data, and the like under the search condition, and outputs route data representing the searched route. At this time, a route in which a total of the link cost given for each road link is smallest is the searched route.

Note that the route search process can be performed in the information center 51. In that case, the CPU 31 transmits the vehicle position, the vehicle direction, the destination, the search condition, and the like to the information center 51 via the network 63. When the information center 51 receives the vehicle position, the vehicle direction, the destination, the search condition, and the like, a route search process unit (not shown) of the CPU 54 performs a route search process similar to that of the CPU 31, reads the search data and the like from the database 58, searches for the route from the departure point to the destination under the search condition based on the vehicle position, the destination, and the search data, and outputs the route data representing the searched route. Next, a transmission process unit (not shown) of the CPU 54 performs a transmission process, and transmits the route data to the navigation device 14 via the network 63.

Next, a guidance process unit (not shown) of the CPU 31 performs a guidance process to perform the route guidance. To this end, a guidance display process unit of the guidance process unit performs a guidance display process, reads the route data, and displays the searched route on the map screen based on the route data.

When, for example, it is necessary that the vehicle make a right or left turn at the intersection which is a target location of the route guidance, the intersection is set as a guidance intersection as a target in performing guidance in the travel direction of the vehicle, and the route guidance is performed by outputting the voice before the vehicle reaches the guidance intersection. Note that, in tollways exclusively for automobiles such as an expressway, an urban expressway, and a toll road, an intersection which merges with or diverges at a junction and the like is also set as the guidance intersection.

Besides the route guidance at the guidance intersection, when it is necessary to perform the guidance for a predetermined facility (location), the facility is set as the guidance facility (facility as a mark), and the route guidance for the guidance facility is performed before the vehicle reaches the guidance facility by outputting the voice. Note that the guidance intersection and the guidance facility form a guidance location.

To this end, a guidance location setting process unit of the guidance process unit performs a guidance location setting process, and sets the guidance intersection, the guidance facility, and the like based on the route data.

A guidance output location setting process unit of the guidance process unit performs a guidance output location setting process, and sets one or more predetermined locations (a plurality of locations in this embodiment) which are slightly before the guidance intersection, the guidance facility, or the like on the searched route by a set distance from the guidance facility or the like, as the guidance output location. When the vehicle has reached the guidance output locations, a voice output process unit of the guidance process unit performs a voice output process to perform the voice output of a guidance phrase having a content set in advance for each guidance output location for the corresponding guidance intersection, the corresponding guidance facility, or the like.

To this end, the guidance phrase is set in advance in accordance with the distance from the guidance output location to the guidance intersection, the guidance facility, or the like, and is recorded in the data record section 16 as a guidance phrase map. A location determination process unit of the guidance process unit performs a location determination process, reads the position of the guidance intersection, the guidance facility, or the like and the vehicle position, calculates the distance from the vehicle position to the guidance intersection, the guidance facility, or the like, and determines whether the vehicle has approached the guidance intersection, the guidance facility, or the like and has reached the predetermined guidance output location. When the vehicle has reached the predetermined guidance output location, the voice output process unit refers to the guidance phrase map, reads the guidance phrase set in advance about the corresponding guidance intersection, the corresponding guidance facility, or the like at the respective guidance output locations, which the vehicle has reached, and performs the voice output.

A guidance location enlarged view formation process unit of the guidance process unit performs a guidance location enlarged view formation process, forms an intersection enlarged view as an enlarged view of the guidance intersection, i.e., a guidance location enlarged view, in a predetermined region of the map screen before the vehicle reaches the guidance intersection, and performs the route guidance using the intersection enlarged view. To this end, when the vehicle reaches a place which is slightly before (on the vehicle position side) the guidance intersection on the searched route by a predetermined distance, the intersection enlarged view is displayed. In this case, a landmark, such as a map of the vicinity of the guidance intersection, the searched route, and the facility as the mark at the guidance intersection, are displayed in the intersection enlarged view.

There are cases where the route guidance is performed using a name of a facility. In that case, when the vehicle has reached the predetermined guidance output location, the voice output process unit refers to the guidance phrase map, reads the guidance phrase set in advance about the corresponding guidance intersection, the corresponding guidance facility, or the like at the guidance output location, which the vehicle has reached, and outputs, for example, "Proceed toward xx hall at intersection n in about 300 meter," "Xx hall is in about 50 meter," or the like by the voice.

There are cases where, for example, the name of the facility is changed due to a circumstance such as a change of a facility owner. In that case, the data is updated by a producer of the map data, whereby the driver can acquire the updated data via an update disk, the network 63, and the like, and record the updated data in the data record section 16. In this embodiment, the driver operates the operation section 34 to acquire the updated data. To this end, an update data acquisition process unit (not shown) of the CPU 31 performs an update data acquisition process, acquires the updated data, and records the updated data in the data record section 16. The updated data include date, such as thime and date when the name of the facility is changed. Note that, when the updated data is acquired via the network 63, the update data acquisition process unit automatically acquires the updated data depending on a maintenance setting.

However, even if the data of the changed name, i.e., the new name, is recorded in the data record section 16, there are cases where the name of facility indicated by a road indication, a guidance board, or the like on the actual road is not changed. In that case, the name of the facility used in the route guidance differs from the name of the facility used on the actual road, whereby the driver cannot drive the vehicle smoothly in accordance with the route guidance.

If the name of the facility indicated by the road indication, the guidance sign, or the like has been changed, and the driver does not know the new name and the name of the facility used in the route guidance differ from what the driver knows, the driver cannot drive the vehicle smoothly in accordance with the route guidance.

In this embodiment, when the updated data is acquired via the update disk, the network 63, and the like, guidance notifying that the name of the facility has been changed is performed when the route guidance is performed with the new name.

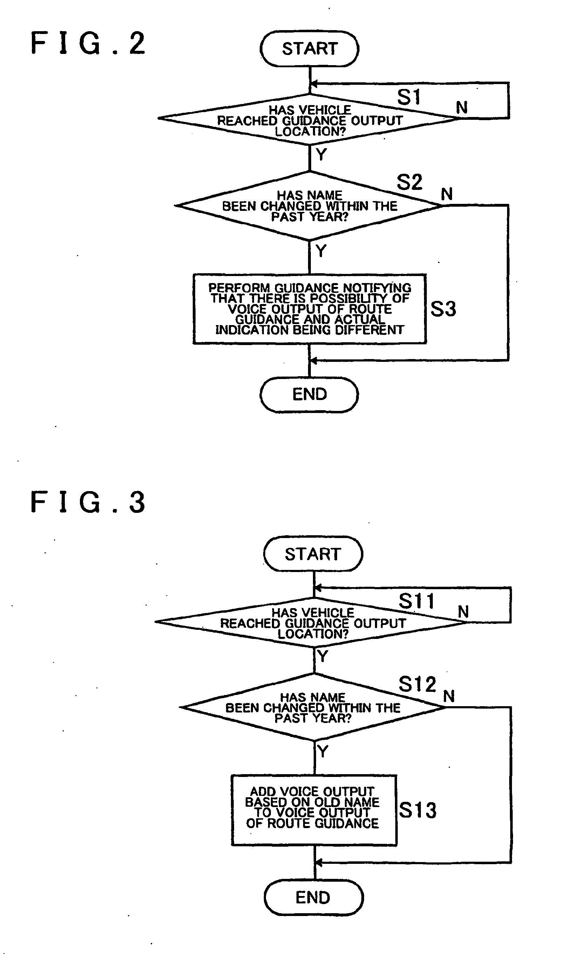

FIG. 2 is a flowchart showing an operation of the guidance process unit according to the first embodiment of the present invention.

First, the location determination process unit determines whether the vehicle has reached the predetermined guidance output location. Next, when the vehicle has reached the guidance output location, a data update determination process unit of the guidance process unit performs a data update determination process, refers to the data record section 16, checks the map data, and determines whether the updated data about the guidance location corresponding to the guidance output location, which the vehicle has reached is acquired. When it is determined that the updated data is acquired, a name determination process unit of the guidance process unit performs a name determination process. Concretely, the name determination process unit identifies a facility used for performing guidance at the guidance location based on the updated data. Also, the name determination process unit acquires data on time and date based on the updated data when the name of the facility was changed. And the name determination process unit determines whether the name of the identified facility has been changed within a predetermined period (within the past year in this embodiment). If the name of the identified facility has been changed within the past year, the voice output process unit outputs the voice of the route guidance based on the new name, and performs guidance notifying that a voice output of the route guidance possibly differs from an actual road indication, an indication on the guidance board, or the like. In this case, the guidance phrases such as, for example, besides "Proceed toward xx hall at intersection n in about 300 meters.". "The name of xx hall has been changed recently." or "The indication on the guidance board may be different." are output by the voice. Note that the voice output process unit forms a change guidance process unit, and the change guidance process unit performs a change guidance process and performs guidance notifying that the name of the facility has been changed.

In this embodiment, if the name of the facility has been changed as described above, the guidance notifying that there is the possibility of the voice output of the route guidance and the actual indication being different is performed, whereby the driver can drive the vehicle smoothly in accordance with the route guidance, even if the name of the facility used in the route guidance and the name of the facility used in the actual road indication, the guidance board, or the like are different.

Even if the driver does not know the new name, and the name of the facility used in the route guidance and the name of the facility known by the driver are different, the driver can drive the vehicle smoothly in accordance with the route guidance.

Next, the flowchart is described.
Step S1: Wait for the vehicle to reach the guidance output location. When the vehicle has reached the guidance output location, proceed to step S2.
Step S2: Determine whether the name has been changed within the past year. If the name has been changed within the past year, proceed to step S3, and if the name has not been changed, terminate the process.
Step 3: Perform the guidance notifying that there is the possibility of the voice output of the route guidance and the actual indication being different, and terminate the process.

Next, a second embodiment of the present invention is described.

FIG. 3 is a flowchart showing an operation of a guidance process unit according to a second embodiment of the present invention.

In this case, when it is determined that the updated data about the guidance location corresponding to the guidance output location, which the vehicle has reached is acquired, the name determination process unit of the guidance process unit identifies a facility used for performing guidance at the guidance location based on the updated data. Also, the name determination process unit acquires data on time and date when the name of the facility was changed based on the updated data. And the name determination process unit determines whether the name of the identified facility has been changed within the predetermined period (within the past year in this embodiment). If the name of the identified facility has been changed within the past year, the voice output process unit outputs the voice of the route guidance based on the new name, and additionally performs the voice output based on the name before change, i.e., the old name. In this case, the guidance phrase such as, for example, "Proceed toward xx hall. Proceed toward former yy hall" is output by the voice.

Next, the flowchart is described.
Step S11: Wait for the vehicle to reach the guidance output location. When the vehicle has reached the guidance output location, proceed to step S12.
Step S12: Determine whether the name has been changed within the past year. If the name has been changed within the past year, proceed to step S 13, and if the name has not been changed, terminate the process.
Step S 13: Add the voice output based on the old name to the voice output of the route guidance, and terminate the process.

In each embodiment described above, the location determination process unit determines whether the vehicle has reached the predetermined guidance output location while the vehicle is being driven, and when the vehicle has reached the predetermined guidance output location, the data update determination process unit refers to the data record section 16, checks the map data, and determines whether the updated data about the guidance location corresponding to the guidance output location, which the vehicle has reached has been acquired. If the name of the facility used for performing guidance as the guidance location has been changed, the voice output process unit outputs the voice of the route guidance based on the new name, and performs the guidance notifying that there is the possibility of the name of the facility used for the route guidance and the name indication of the facility on the road indication, the guidance board, or the like being different. However, the guidance notifying that there is the possibility of the name of the facility used for the route guidance and the name indication of the facility on the road indication, the guidance board, or the like being different may be performed before driving of the vehicle is started.

In that case, when the searched route is obtained in the route search process, the data update determination process unit refers to the data record section 16, checks the map data, and determines whether the updated data about the guidance location on the searched route has been acquired, before the driving of the vehicle is started. If the name of the facility used for performing guidance at the guidance location on the searched route has been changed, the voice output process unit performs the guidance notifying that there is the possibility of the name of the facility used for the route guidance while the vehicle is being driven and the name indication of the facility on the road indication, the guidance board, or the like, which are set around the guidance location, being different. In this case, the guidance phrase such as, for example "The name of guidance location on the searched route has been changed recently." or "The indication on the guidance board may be different." is output by the voice.

In each embodiment described above, the guidance notifying that the name of the facility has been changed is performed by the voice output. However, the guidance may be displayed on the screen of the display section 35. In that case, the guidance display process unit displays the guidance notifying that the name of the facility has been changed by a highlight display using a blink or the like.

Note that the present invention is not limited to the respective embodiments described above, and that various modifications are possible based on the intent of the present invention and are not excluded from the scope of the present invention.
An information guidance system includes a route searched process unit which searches a route from a departure point to a destination as a searched route, a name determination process unit which determines whether a name of a facility used for performing guidance of a guidance location on the searched route has been changed, and a change guidance process unit which, if the name has been changed, performs guidance notifying that the name has been changed. If the name of the facility used for performing guidance of a guidance location has been changed, the guidance notifying that the name of the facility has been changed is performed, whereby the vehicle can be driven smoothly in accordance with a route guidance.

## Claims

1. An information guidance system comprising:
a route search process unit configured to search for a route from a departure point to a destination as a searched route;
a guidance location setting process unit configured to set, based on the searched route, a guidance facility used for performing guidance of a guidance location on the searched route; **characterized by**
a name determination process unit configured to determine whether a name of the guidance facility set in the guidance location setting process has been changed; and
a change guidance process unit configured to perform; in a case where the name of the guidance facility has been changed, guidance notifying that the name of the guidance facility has been changed.

2. The information guidance system according to claim 1, further comprising:
a location determination process unit configured to determine whether the vehicle has reached a guidance output location set slightly before the guidance location ahead;
wherein, when the vehicle has reached the guidance output location, the name determination process unit is configured to determine whether the name has been changed and the change guidance process unit is configured to perform the guidance notifying that the name has been changed.

3. The information guidance system according to claim 1, wherein the name determination process unit is configured to determine, when the searched route has been searched in the route search process unit, whether the name of the guidance facility has been changed; and
the change guidance process unit is configured to perform, when it has been determined that the name of the guidance facility has been changed in the name determination process unit, the guidance notifying that the name has been changed, before driving of a vehicle is started along the searched route.

4. The information guidance system according to any one of claims 1 to 3, wherein the guidance location is a guidance intersection as a target for performing guidance in a travel direction of the vehicle.

5. The information guidance system according to any one of claims 1 to 3, wherein the guidance location is a facility as a mark for a driver of the vehicle.

6. The information guidance system according to any one of claims 1 to 3, wherein the change guidance process unit is configured to perform the guidance based on the changed name and the guidance based on a name before change.

7. An information guidance method, comprising:
a route search process for searching for a route from a departure point to a destination as a searched route;
a guidance location setting process for setting, based on the searched route, a guidance facility used for performing guidance of a guidance location on the searched route;
**characterized by**
a name determination process for determining whether a name of the guidance facility set in the guidance location setting process has been changed; and
a change guidance process for performing, in a case where the name of the guidance facility has been changed, guidance notifying that the name of the guidance facility has been changed.

8. The information guidance method according to claim 7, further comprising:
a location determination process for determining whether the vehicle has reached a guidance output location set slightly before the guidance location ahead;
wherein, when the vehicle has reached the guidance output location, the name determination process determines whether the name has been changed and the change guidance process performs the guidance notifying that the name has been changed.

9. The information guidance method according to claim 7, wherein the name determination process determines, when the searched route has been searched in the route search process, whether the name of the guidance facility has been changed; and
the change guidance process performs, when it has been determined that the name of the guidance facility has been changed in the name determination process, the guidance notifying that the name has been changed, before driving of a vehicle is started along the searched route.

10. The information guidance method according to any one of claims 7 to 9, wherein the guidance location is a guidance intersection as a target for performing guidance in a travel direction of the vehicle.

11. The information guidance method according to any one of claims 7 to 9, wherein the guidance location is a facility as a mark for a driver of the vehicle.

12. The information guidance method according to any one of claims 8 to 10, wherein the change guidance process performs the guidance based on the changed name and the guidance based on a name before change.

13. A computer program product including a program for a processing device, comprising software code portions for performing the processes of any one of claims 7 to 12 when the program is run on the processing device.

## Patentansprüche

1. Informationsführungssystem, mit:
einer Routensuch-Prozesseinheit, die dazu eingerichtet ist, um nach einer Route von einem Ausgangspunkt zu einem Ziel als eine gesuchte Route zu suchen;
einer Führungsorts-Einstell-Prozesseinheit, die dazu eingerichtet ist, um basierend auf der gesuchten Route eine zur Durchführung der Führung anhand eines Führungsortes verwendete Führungsanlage auf der gesuchten Route einzustellen;
**gekennzeichnet durch**
eine Namensbestimmungs-Prozesseinheit, die dazu eingerichtet ist, um zu bestimmen, ob ein Name der in dem Führungsorts-Einstell-Prozess eingestellten Führungsanlage geändert wurde; und
eine Änderungsführungs-Prozesseinheit, die dazu eingerichtet ist, um in einem Fall, in dem der Name der Führungsanlage geändert wurde, eine Führung mit einer Benachrichtigung darüber, dass der Name der Führungsanlage geändert wurde, durchzuführen.

2. Informationsführungssystem gemäß Anspruch 1, weiterhin mit:
einer Ortsbestimmungs-Prozesseinheit, die dazu eingerichtet ist, um zu bestimmen, ob das Fahrzeug einen Führungsausgabeort erreicht hat, der ein wenig vor dem voraus liegenden Führungsort eingestellt ist;
wobei die Namensbestimmungs-Prozesseinheit dazu eingerichtet ist, um zu bestimmen, ob der Name geändert wurde und die Änderungsführungs-Prozesseinheit dazu eingerichtet ist, um die Führung mit einer Benachrichtigung darüber, dass der Name geändert wurde, durchzuführen, wenn das Fahrzeug den Führungsausgabeort erreicht hat.

3. Informationsführungssystem gemäß Anspruch 1, wobei die Namensbestimmungs-Prozesseinheit dazu eingerichtet ist, um zu bestimmen, ob der Name der Führungsanlage geändert wurde, wenn die gesuchte Route in der Routensuch-Prozesseinheit gesucht wurde; und
die Änderungsführungs-Prozesseinheit dazu eingerichtet ist, um die Führung mit einer Benachrichtigung darüber, dass der Name geändert wurde, durchzuführen, bevor mit dem Losfahren eines Fahrzeug entlang der gesuchten Route begonnen wird, wenn in der Namensbestimmungs-Prozesseinheit bestimmt wurde, dass der Name der Führungsanlage geändert wurde.

4. Informationsführungssystem gemäß einem der Ansprüche 1 bis 3, wobei der Führungsort eine Führungskreuzung als ein Ziel zur Durchführung einer Führung in einer Reiserichtung des Fahrzeugs ist.

5. Informationsführungssystem gemäß einem der Ansprüche 1 bis 3, wobei der Führungsort eine Anlage als eine Markierung für einen Fahrer des Fahrzeugs ist.

6. Informationsführungssystem gemäß einem der Ansprüche 1 bis 3, wobei die Änderungsführungs-Prozesseinheit dazu eingerichtet ist, um die Führung basierend auf dem geänderten Namen und die Führung basierend auf einem Namen vor der Änderung durchzuführen.

7. Informationsführungsverfahren, mit:
einem Routensuch-Prozess zum Suchen nach einer Route von einem Ausgangspunkt zu einem Ziel als eine gesuchte Route;
einem Führungsorts-Einstell-Prozess zum Einstellen einer zum Durchführen einer Führung anhand eines Führungsortes verwendete Führungsanlage auf der gesuchten Route, basierend auf der gesuchten Route;
**gekennzeichnet durch**
einen Namensbestimmungs-Prozess zum Bestimmen, ob ein Name der in dem Führungsorts-Einstell-Prozess eingestellten Führungsanlage geändert wurde; und
einen Änderungsführungs-Prozess zum Durchführen einer Führung, mit einer Benachrichtigung darüber, dass der Name der Führungsanlage geändert wurde, in einem Fall, in dem der Name der Führungsanlage geändert wurde.

8. Informationsführungsverfahren gemäß Anspruch 7, weiterhin mit:
einem Ortsbestimmungs-Prozess zum Bestimmen, ob das Fahrzeug einen Führungsausgabeort erreicht hat, der ein wenig vor dem voraus liegenden Führungsort eingestellt ist;
wobei der Namensbestimmungs-Prozess bestimmt, ob der Name geändert wurde und der Änderungsführungs-Prozess die Führung mit einer Benachrichtigung, dass der Name geändert wurde, durchführt, wenn das Fahrzeug den Führungsausgabeort erreicht hat.

9. Informationsführungsverfahren gemäß Anspruch 7, wobei der Namensbestimmungs-Prozess bestimmt, ob der Name der Führungsanlage geändert wurde, wenn die gesuchte Route in dem Routensuch-Prozess gesucht wurde; und
der Änderungsführungs-Prozess die Führung mit einer Benachrichtigung, dass der Name geändert wurde, durchführt, bevor mit dem Losfahren eines Fahrzeug entlang der gesuchten Route begonnen wird, wenn in dem Namensbestimmungs-Prozess bestimmt wurde, dass der Name der Führungsanlage geändert wurde.

10. Informationsführungsverfahren gemäß einem der Ansprüche 7 bis 9, wobei der Führungsort eine Führungskreuzung als ein Ziel zum Durchführen einer Führung in einer Reiserichtung des Fahrzeugs ist.

11. Informationsführungsverfahren gemäß einem der Ansprüche 7 bis 9, wobei der Führungsort eine Anlage als eine Markierung für einen Fahrer des Fahrzeugs ist.

12. Informationsführungsverfahren gemäß einem der Ansprüche 8 bis 10, wobei der Änderungsführungs-Prozess die Führung basierend auf dem geänderten Namen und die Führung basierend auf einem Namen vor der Änderung durchführt.

13. Computerprogrammprodukt, das ein Programm für ein Verarbeitungsgerät umfasst, mit Softwarecodeabschnitten zum Durchführen der Prozesse eines der Ansprüche 7 bis 12, wenn das Programm auf dem Verarbeitungsgerät ausgeführt wird.

## Revendications

1. Système de guidage d'informations comprenant :
une unité de processus de recherche d'itinéraire configurée pour chercher un itinéraire d'un point de départ jusqu'à une destination comme étant un itinéraire recherché ;
une unité de processus de réglage d'emplacement de guidage configurée pour régler, sur la base de l'itinéraire recherché, un établissement de guidage utilisé pour exécuter le guidage d'un emplacement de guidage sur l'itinéraire recherché ; **caractérisé par**
une unité de processus de détermination de nom configurée pour déterminer si un nom de l'établissement de guidage réglé dans le processus de réglage d'emplacement de guidage a été changé ; et
une unité de processus de guidage de changement configurée pour exécuter, dans le cas où le nom de l'établissement de guidage a été changé, un guidage notifiant que le nom de l'établissement de guidage a été changé.

2. Système de guidage d'informations selon la revendication 1, comprenant en outre :
une unité de processus de détermination d'emplacement configurée pour déterminer si le véhicule a atteint un emplacement de sortie de guidage réglé légèrement avant l'emplacement de guidage à venir;
où, lorsque le véhicule a atteint l'emplacement de sortie de guidage, l'unité de processus de détermination de nom est configurée pour déterminer si le nom a été changé et l'unité de processus de guidage de changement est configurée pour exécuter le guidage en notifiant le changement de nom.

3. Système de guidage d'informations selon la revendication 1, dans lequel l'unité de processus de détermination de nom est configurée pour déterminer, lorsque l'itinéraire recherché a fait l'objet d'une recherche dans l'unité de processus de recherche d'itinéraire, si le nom de l'établissement de guidage a été changé ; et
l'unité de processus de guidage de changement est configurée pour exécuter, lorsqu'on a déterminé que le nom de l'établissement de guidage a été changé dans l'unité de processus de détermination de nom, le guidage en notifiant le changement de nom, avant que la conduite d'un véhicule ne commence le long de l'itinéraire recherché.

4. Système de guidage d'informations selon l'une quelconque des revendications 1 à 3, dans lequel l'emplacement de guidage est une intersection de guidage telle qu'une cible pour exécuter le guidage dans une direction de déplacement du véhicule.

5. Système de guidage d'informations selon l'une quelconque des revendications 1 à 3, dans lequel l'emplacement de guidage est un établissement tel qu'un repère pour un conducteur du véhicule.

6. Système de guidage d'informations selon l'une quelconque des revendications 1 à 3, dans lequel l'unité de processus de guidage de changement est configurée pour exécuter le guidage sur la base du nom changé et le guidage sur la base d'un nom avant le changement.

7. Procédé de guidage d'informations, comprenant :
un processus de recherche d'itinéraire pour rechercher un itinéraire d'un point de départ jusqu'à une destination comme étant un itinéraire recherché ;
un processus de réglage d'emplacement de guidage pour régler, sur la base de l'itinéraire recherché, un établissement de guidage utilisé pour exécuter le guidage d'un emplacement de guidage sur l'itinéraire recherché ; **caractérisé par**
un processus de détermination de nom pour déterminer si un nom de l'établissement de guidage réglé dans le processus de réglage d'emplacement de guidage a été changé ; et
un processus de guidage de changement pour exécuter, au cas où le nom de l'établissement de guidage a été changé, un guidage notifiant que le nom de l'établissement de guidage a été changé.

8. Procédé de guidage d'informations selon la revendication 7, comprenant en plues :
un processus de détermination d'emplacement pour déterminer si le véhicule a atteint un emplacement de sortie de guidage réglé légèrement avant l'emplacement de guidage à venir ;
où, lorsque le véhicule a atteint l'emplacement de sortie de guidage, le processus de détermination de nom détermine si le nom a été changé et le processus de guidage de changement exécute le guidage en notifiant le changement de nom.

9. Procédé de guidage d'informations selon la revendication 7, dans lequel le processus de détermination de nom détermine, lorsque l'itinéraire recherché a fait l'objet d'une recherche dans le processus de recherche d'itinéraire, si le nom de l'établissement de guidage a été changé ; et
le processus de guidage de changement exécute, lorsqu'on a déterminé que le nom de l'établissement de guidage a été changé dans le processus de détermination de nom, le guidage en notifiant le changement de nom, avant de commencer la conduite du véhicule le long de l'itinéraire recherché.

10. Procédé de guidage d'informations selon l'une quelconque des revendications 7 à 9, dans lequel l'emplacement de guidage est une intersection de guidage telle qu'une cible pour exécuter le guidage dans une direction de déplacement du véhicule.

11. Procédé de guidage d'informations selon l'une quelconque des revendications 7 à 9, dans lequel l'emplacement de guidage est un établissement tel qu'un repère pour un conducteur du véhicule.

12. Procédé de guidage d'informations selon l'une quelconque des revendications 8 à 10, dans lequel le processus de guidage de changement exécute le guidage sur la base du nom changé et le guidage sur la base d'un nom avant le changement.

13. Produit de programme informatique qui comporte un programme pour un dispositif de traitement, comprenant des parties de code logiciel pour exécuter les processus de l'une quelconque des revendications 7 à 12 lorsque le programme est exécuté sur le dispositif de traitement.
